# EUROPEAN PATENT SPECIFICATION

(11) **EP 3 393 826 B1**
(45) Date of publication and mention of the grant of the patent: **18.09.2019**
(21) Application number: 16819689.7
(22) Date of filing: 16.12.2016
(51) Int. Cl.: B60C 11/04, B60C 19/00, B60C 11/13

(54) **A NOISE REDUCING TREAD**
GERÄUSCHMINDERNDE LAUFFLÄCHE
BANDE DE ROULEMENT RÉDUISANT LE BRUIT

(30) Priority: 25.12.2015 WO PCT/JP2015/086592
(43) Date of publication of application: 31.10.2018
(73) Proprietor: Compagnie Générale des Etablissements Michelin, 63000 Clermont-Ferrand (FR)
(72) Inventor: TEZUKA Takashi, Tokyo 163-1073 (JP)
(74) Representative: Regimbeau
(86) International application number: PCT/JP2016/087484
(87) International publication number: WO 2017/110663

(56) References cited:
- JP-A- H03 276 802
- JP-A- H10 250 317
- JP-A- 2003 165 310
- JP-A- 2012 116 339

## Description

### [Technical Field]

The present invention relates to a tread for a tire, in particular to a tread for a tire having a closing device enable to attenuate a noise generated by groove resonance in a primary groove.

### [Background Art]

A groove resonance is generated by occurrence of resonance in an air column defined between a groove in a tread and a road surface in contact with the tire. The frequency of this groove resonance is dependent on a length of the air column formed between groove and the road surface in the contact patch.

This groove resonance has a consequence in an interior noise and an exterior noise on a vehicle equipping such tires, a frequency of which interior and exterior noise is often at around 1 kHz where human ear is sensitive.

In order to reduce such groove resonance, it is known to provide a plurality of closing devices in the form of a flexible fence made of rubber-based material and relatively thin in thickness in each primary groove. It is effective that each flexible fence covers all or at least major part of the sectional area in the primary groove. Each flexible fence can extend from a groove bottom, or be fixed onto at least one of a groove sidewall delimiting such primary groove. Because being relatively thin in thickness, each flexible fence has to bend for opening the primary groove section to flow water on the road surface, in particular on the wet road.

Thanks to such flexible fences, the length of the air column is reduced so as to be shorter than the total length of primary groove in a contact patch, which leads to change the frequency of groove resonance. This change of resonance frequency makes the sound generated by the groove resonance less sensitive to human ear.

For preserving function of drainage, in case driving in rainy weather, it is necessary that such flexible fence bends in a suitable way under the action of the pressure of water for opening the section of the primary groove. Several solutions have been proposed using this type of closing device to reduce groove resonance of the primary groove.

EP0908330 discloses, in Fig.4a, a tread having principal (primary) groove equipping with fence portions with three flexible fences, wherein two flexible fences extend from the opposite groove sidewalls, another flexible fence extends from the groove bottom. However with such configuration, it is difficult to maintain satisfactory drainage capability, in particular when a groove depth is reduced with wear while maintaining satisfactory groove resonance reduction, as bending of the flexible fence extending from the groove bottom with hydrodynamic pressure occurs generally between middle part and bottom part of such flexible fence, and bending rigidity of such flexible fence increases with wear resulting disturbance of drainage. Moreover even in such situation, the flexible fences extending from groove sidewalls are not capable to provide extra drainage capability.

WO2013/072169 discloses, in Fig.1, a tread having a groove providing with two flexible devices (flexible fences) both of which extend from each side of groove sidewalls, the flexible devices are provided with a notch on their bottom wall. However, with such configuration, coverage of the section of the groove via the flexible fence becomes weak due to the notch, and there is a difficulty for molding and demolding such flexible fences resulting decreased productivity of such tread.
JP2012-116339 discloses, in Fig. 1, a tire having a tread comprising more than or equal to one circumferential groove consisting of a pair of groove walls and a groove bottom connecting lower ends of the pair of groove walls, the circumferential groove comprising a pair of plate-like projection portion each projecting from one groove wall toward another groove wall.

### [Citation List]

### [Patent Literature]

[PTL 1]
   EP0908330
[PTL 2]
   WO2013/072169
[PTL 3]
   JP2012-116339

### Definitions:

A "radial direction/orientation" is a direction/orientation perpendicular to axis of rotation of the tire. This direction/orientation corresponds to thickness direction of the tread.

An "axial direction/orientation" is a direction/orientation parallel to axis of rotation of the tire.

A "circumferential direction/orientation" is a direction/orientation which is tangential to any circle centered on axis of rotation. This direction/orientation is perpendicular to both the axial direction/orientation and the radial direction/orientation.

A "tire" means all types of elastic tire whether or not subjected to an internal pressure.

A "tread" of a tire means a quantity of rubber material bounded by lateral surfaces and by two main surfaces one of which is intended to come into contact with ground when the tire is rolling.

A "groove" is a space between two rubber faces/sidewalls which do not contact between themselves under usual rolling condition connected by another rubber face/bottom. A groove has a width and a depth.

A "primary groove" is a groove relatively wider width as primarily responsible for drainage. Often the case such primary groove extends towards circumferential orientation in general in a form of straight, zigzag and so on. The primary groove can also be understood as a groove extending towards oblique orientation having relatively wider width as primarily responsible for drainage.

A "contact patch" is a footprint of a tire mounted onto its standard rim as identified in tire standards such as ETRTO, JATMA or TRA, and inflated at its nominal pressure and under its nominal load.

It is thus an object of the invention to provide a tread for a tire, which tread can improve drainage capability even with reduced groove depth, while maintaining satisfactory reduction on groove resonance and productivity for manufacturing such tread.

### [Summary of Invention]

### [Solution to Problem]

The present invention provide a tread for a tire having a contact face intended to come into contact with ground during rolling and comprising at least one primary groove having depth D and delimited by two opposite groove sidewalls, these groove sidewalls being axially connected by a groove bottom, the primary groove being provided with a plurality of closing devices each comprising at least two flexible fences, at least one first flexible fence having thickness t1 and extending from the groove bottom in a radially outward direction of the tire, and at least one second flexible fence having thickness t2 and extending from one groove sidewall toward the other groove sidewall, each of the closing devices covering at least equal to 70% of the sectional area of the primary groove and being disposed such that at least one closing device is always located in the primary groove within a contact patch, the second flexible fence having a bottom edge extending along and apart from the groove bottom and a top edge extending substantially parallel to the contact face, the second flexible fence being shaped so as to form an angle A1 between an imaginary line connecting a free end of the top edge of the second flexible fence and a free end of the bottom edge of the second flexible fence and an imaginary line extending from the free end of the top edge in a tire radial direction, a width wb1 of the first flexible fence at the groove bottom is at most equal to 45% of a width WB of the groove bottom of the primary groove, and a width wb2 of the second flexible fence at the bottom edge is at most equal to 40% of the width WB of the groove bottom of the primary groove.

This arrangement improves drainage capability in particular when groove depth is reduced with tread wear, while maintaining satisfactory reduction on groove resonance and productivity for manufacturing such tread.

According the above arrangement, the primary groove is provided with the plurality of closing devices each comprising at least two flexible fences so as to cover at least equal to 70% of the cross sectional area of the primary groove and being disposed such that at least one closing device is always located in the primary groove within the contact patch during rolling. Therefore, the length of the air column of the primary groove formed with the road surface is different from that formed in case there is no closing device, and the peak of groove resonance is shifted to outside of the frequency range audible to the human ear. As a result, groove resonance due to air column resonance of the primary groove can be improved.

Since the width wb1 of the first flexible fence at the groove bottom is at most equal to 45% of the width WB of the groove bottom of the primary groove, satisfactory space for drainage can be maintained even with reduced groove depth with wear in which the first flexible fence becomes difficult to bend with hydrodynamic pressure of the liquid. As a result, drainage capability of the primary groove with reduced groove depth can be improved.

If the width wb1 of the first flexible fence at the groove bottom is more than 45% of the width WB of the groove bottom of the primary groove, there is a risk that drainage capability of the primary groove with reduced groove depth cannot be maintained. By setting this width wb1 of the first flexible fence at most equal to 45% of the width WB of the groove bottom of the primary groove, drainage capability of the primary groove with reduced groove depth can be improved. This width wb1 of the first flexible fence at the groove bottom is preferably at most equal to 40% of the width WB of the groove bottom of the primary groove.

The width wb2 of the second flexible fence of the closing device at the bottom edge is at most equal to 40% of the width WB of the groove bottom of the primary groove. Therefore, it is possible to avoid occurrence of cracking during molding and demolding of the second flexible fence, in particular around an area where the bottom edge of the second flexible fence is connected to the groove sidewall as enough flexibility of the second flexible fence during molding and demolding is secured. As a result, productivity of the tread is maintained.

If the width wb2 of the second flexible fence at the bottom edge is more than 40% of the width WB of the groove bottom of the primary groove, there is a risk that cracking of the second flexible fence during molding and demolding occurs in particular an area where the bottom edge of the second flexible fence is connected to the groove sidewall. By setting this width wb2 of the second flexible fence at the bottom edge to at most equal to 40% of the width WB of the groove bottom of the primary groove, productivity of the tread is maintained. This width wb2 of the second flexible fence at the bottom edge is preferably at most equal to 35%, more preferably at most equal to 30% of the width WB of the groove bottom of the primary groove.

In another preferred embodiment, the first flexible fence and the second flexible fence do not overlap in a circumferential direction.

According to this arrangement, manufacturing of the tread with the flexible fences becomes easier, as both the first and the second flexible fences can be manufactured with simple tool, for example with the molding element as described in WO2013/076233, thus productivity of the tread can further be improved.

In another preferred embodiment, the angle A1 is between -25° and 25°.

According to this arrangement, it is possible to further avoid occurrence of cracking during molding and demolding of the second flexible fence, in particular around an area where the bottom edge of the second flexible fence is connected to the groove sidewall as enough flexibility of the second flexible fence during molding and demolding is secured further.

If the angle A1 is less than -25° or more than 25°, there is a risk that cracking of the second flexible fence during molding and demolding occurs in particular an area where the bottom edge of the second flexible fence is connected to the groove sidewall even width wb2 of the second flexible fence at the bottom edge is limited to at most equal to 40% of the width WB of the groove bottom of the primary groove. By setting this angle A1 between -25° and 25°, productivity of the tread is maintained. This angle A1 is preferable between -20° and 20°, more preferably between -18° and 18°.

In another preferred embodiment, the closing device include one first flexible fence and two second flexible fences and each of second flexible fences extends from each of opposite groove sidewalls.

According to this arrangement, it is possible to effectively cover as broader cross sectional area of the primary groove as possible by the closing device, while maintaining good productivity of the tread with the flexible fences as closing device, as the sectional area covered by each flexible fence can be reduced using simple tool for manufacturing the tread with the flexible fences as the closing device.

In another preferred embodiment, the thickness t1 of the first flexible fence is different from the thickness t2 of the second flexible fence.

According to this arrangement, performance compromise by the flexible fences can be achieved. By making the thickness t1 of the first flexible fence thicker than the thickness t2 of the second flexible fence, it is possible to have a regular wear of the first flexible fence with tread wear by increased bending rigidity of the first flexible fence relative to the second flexible fence. Contrarily by making the thickness t1 of the first flexible fence thinner than the thickness t2 of the second flexible fence, it is possible to have easier bending of the first flexible fence even with reduced groove depth which results further improvement on drainage capability.

### [Brief Description of Drawings]

Other characteristics and advantages of the invention arise from the description made hereafter in reference to the annexed drawings which show, as nonrestrictive examples, the embodiments of the invention.

In these drawings:
Fig. 1 is a schematic view of a portion of a tread for a tire according to a first embodiment of the present invention;
Fig.2 is an enlarged schematic view showing a portion indicated as II in Fig. 1;
Fig.3 is a schematic cross sectional view taken along line III-III in Fig. 1;
Fig.4 is an enlarged schematic view of a portion according to a second embodiment of the present invention;
Fig.5 is a schematic cross sectional view according to the second embodiment of the present invention;
Fig.6 is an enlarged schematic view of a portion according to a third embodiment of the present invention;
Fig.7 is a schematic cross sectional view according to the third embodiment of the present invention;

### [Description of Embodiments]

Preferred embodiments of the present invention will be described below referring to the drawings.

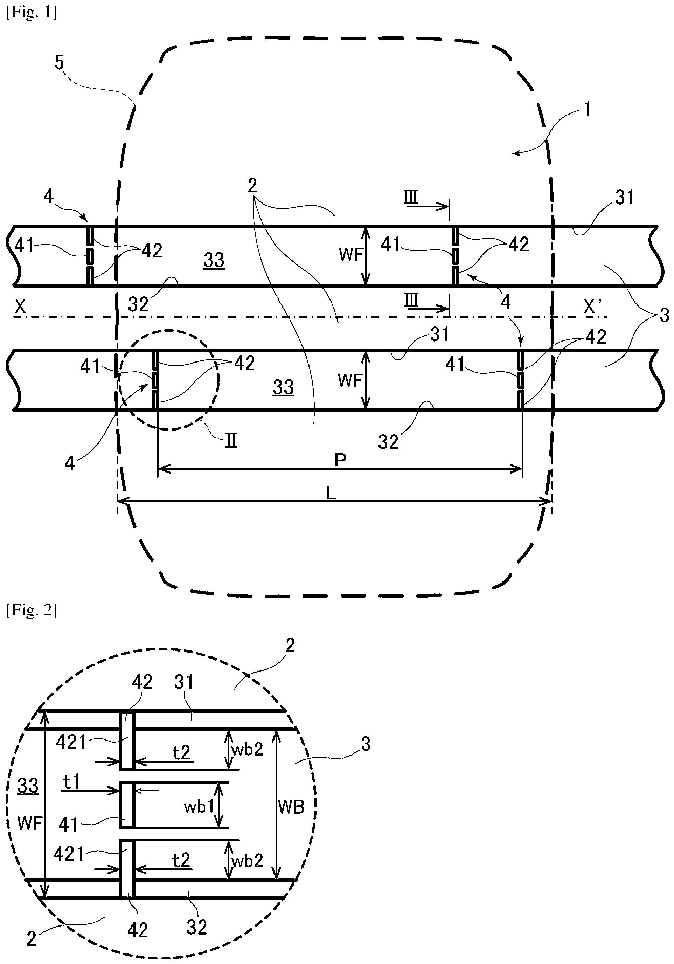

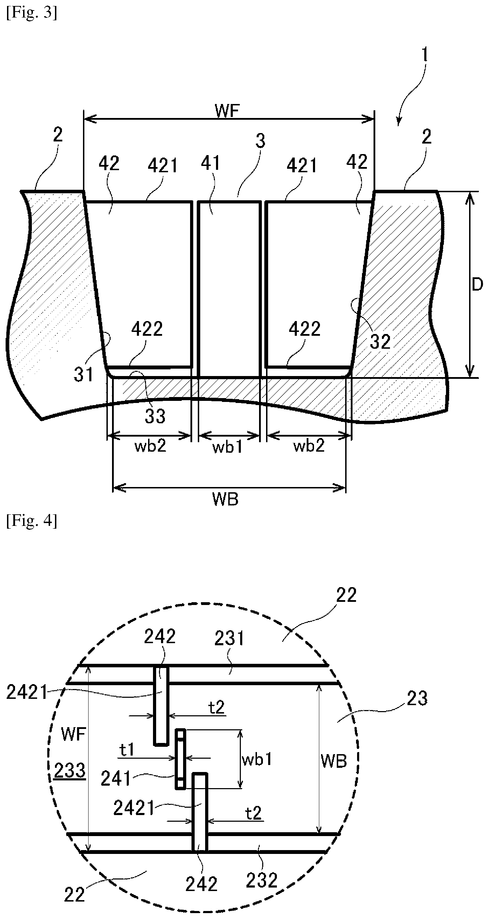

A tread 1 for a tire according to a first embodiment of the present invention will be described referring to Figs. 1, 2 and 3. Fig. 1 is a schematic view of a portion of a tread 1 according to the first embodiment of the present invention. Fig. 2 is an enlarged schematic view showing a portion indicated as II in Fig. 1. Fig. 3 is a schematic cross sectional view taken along line III-III in Fig. 1.

The tread 1 is a tread for a tire having dimension 225/45R17 and comprises a contact face 2 intended to come into contact with the ground during rolling, a plurality of primary grooves 3 extending in a tire circumferential direction indicated as XX'. The primary grooves 3 are delimited by two groove sidewalls 31, 32 facing each other and being connected by a groove bottom 33. The primary groove 3 has a width WF at a level of the contact face 2 and a depth D (as shown in Fig. 3). The groove bottom 33 has a width WB which is narrower than the width WF at the level of contact face 2.

As shown in Fig. 1, a contact patch 5 has a contact patch length L in a tire circumferential direction when the tire with the tread 1 is mounted onto its standard rim and inflated at its nominal pressure and its nominal load is applied. According to 'ETRTO Standard Manual 2015' the standard rim for this size is 7.5J, the nominal pressure is 250kPa and the nominal load is 615kg.

As shown in Fig. 1, in the primary groove 3, a plurality of closing devices 4 is provided. The closing device 4 comprises one first flexible fence 41 and two second flexible fences 42 for dividing an air column created with the ground and the primary groove 3 in the contact patch 5 during rolling. Each closing device 4 is spaced from each other by distance P in the tire circumferential direction in the primary groove 3. The distance P is shorter than the contact patch length L such that at least one closing device 4 in each primary groove 3 is always located in the contact patch 5 during rolling.

The closing device 4 comprises one first flexible fence 41 having a thickness of t1 and extending from the groove bottom 33 of the primary groove 3 in a radially outward direction of the tire and two second flexible fences 42 having a thickness of t2 and extending from one of the groove sidewalls 31, 32 of the primary groove 3 toward the opposite groove sidewall 32, 31 of the same primary groove 3. Each the closing device 4 covers at least equal to 70% of the cross sectional area of the primary groove 3, while radially outermost portion of each the flexible fences are radially inwardly offset from the level of the contact face 2, as shown in Figs. 2 and 3.

The width (axial length) wb1 of the first flexible fence 41 at the groove bottom 33 is set at most equal to 45% of the width (axial length) WB of the groove bottom 33 of the primary groove 3. In the first embodiment, this width wb1 of the first flexible fence 41 at the groove bottom 33 is equal to 4.0mm, which is 34% of the width WB of the groove bottom 33 of the primary groove 3.

The second flexible fence 42 has a bottom edge 422 and a top edge 421. The bottom edge 422 axially extends in parallel to the groove bottom 33 at a level upwardly spaced from the groove bottom 33 defining an axially extending narrow gap therebetween. The top edge 421 axially extends substantially parallel to the contact face 2 at a level downwardly spaced from the contact face 2. In the present embodiment, a free or distal end of the top and bottom edges 421, 422 are radially aligned.

The width (axial length) wb2 of the second flexible fence 42 at the bottom edge 422 is set at most equal to 40% of the width (axial length) WB of the groove bottom 33. In this first embodiment, this width wb2 of the second flexible fence 42 at the bottom edge 422 of the same second flexible fence 42 is equal to 2.4mm, which is 20% of the width WB of the groove bottom 33 of the primary groove 3.

As shown in Figs. 2 and 3, between a free or distal end side edge of the second flexible fence 42 and a side edge of the first flexible fence 41, a radially extending narrow gap is formed. Thus, the first flexible fence 41 and the second flexible fence 42 are shaped so as not to overlap in a circumferential direction.

Further, the second flexible fence 42 is shaped so as to form an angle A1 between an imaginary line connecting the free ends of the top edge 421 and bottom edge 422 and an imaginary line extending from a free end of the top edge 421 in a tire radial direction. In this first embodiment, since the free ends of the top edge 421 and bottom edge 422 are radially aligned, this angle A1 is 0° and not shown in Figs. 1, 2 and 3.

The tread 1 has the same structure as the conventional tread except for an arrangement regarding the closing device 4 and is intended to be applied to a conventional pneumatic radial tire and other non-pneumatic tire. Thus, description of the internal construction of the tread 1 will be omitted.

The primary groove 3 is provided with the plurality of closing devices 4 each covering at least equal to 70% of the radial sectional area of the primary groove 3 and being disposed such that at least one closing device 4 is always located in the contact patch 5. Therefore, the length of the air column formed by the primary groove 3 in the contact patch 5 is shifted to a length whose groove resonance peak is outside of the frequency audible range for the human ear. Thus, groove resonance due to air column resonance of the primary groove 3 can be harmless.

The second flexible fence 42 of the closing device 4 is provided so as to have the bottom edge 422 facing to the groove bottom 33 and the width wb1 of the first flexible fence 41 at the groove bottom 33 is at most equal to 45% of the width WB of the groove bottom 33 of the primary groove 3. Satisfactory space for drainage can be maintained even with reduced groove depth with wear in which the first flexible fence 41 becomes difficult to bend with hydrodynamic pressure of the water. As a result, drainage capability of the primary groove 3 with reduced groove depth can be improved. This width wb1 of the first flexible fence 41 at the groove bottom 33 is preferably at most equal to 40% of the width WB of the groove bottom 33 of the primary groove 3.

The width wb2 of the second flexible fence 42 of the closing device 4 at the bottom edge 422 is at most equal to 40% of the width WB of the groove bottom 33 of the primary groove 3. Therefore, it is possible to avoid occurrence of cracking during molding and demolding of the second flexible fence 42, in particular around an area where the bottom edge 422 of the second flexible fence 42 is connected to the groove sidewall 31, 32 as enough flexibility of the second flexible fence 42 during molding and demolding is secured. As a result, productivity of the tread 1 is maintained. This width wb2 of the second flexible fence 42 at the bottom edge 422 is preferably at most equal to 35%, more preferably at most equal to 30% of the width WB of the groove bottom 33 of the primary groove 3.

The first flexible fence 41 and the second flexible fence 42 do not overlap in a circumferential direction. Manufacturing of the tread 1 with the closing device 4 (the flexible fences 41, 42) becomes easier, as both the first and the second flexible fences 41, 42 can be manufactured with simple tool, for example with the molding element as described in WO2013/076233, thus productivity of the tread can further be improved.

The closing device 4 comprises one first flexible fence 41 and two second flexible fences 42 extending from the opposite groove sidewalls 31, 32. It is possible to effectively cover major part of the cross sectional area of the primary groove 3 by the closing device 4, while maintaining good productivity of the tread 1 with the flexible fences 41, 42 as closing device 4, as the sectional area covered by each flexible fence 41, 42 can be reduced using simple tool for manufacturing the tread 1 with the flexible fences 41, 42 as the closing device 4.

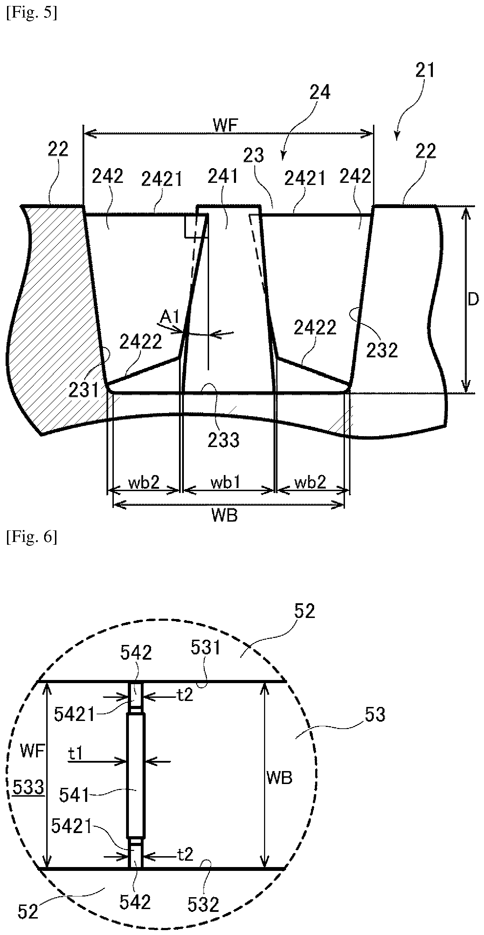

A tread 21 according to a second embodiment of the present invention will be described referring to Figs. 4 and 5. Fig.4 is an enlarged schematic view of a portion according to the second embodiment of the present invention. Fig.5 is a schematic cross sectional view according to the second embodiment of the present invention. The constitution of this second embodiment is similar to that of the first embodiment other than the arrangement shown in Figs. 4 and 5, thus description will be made referring to Figs. 4 and 5.

In the second embodiment, the closing device 24 comprises one first flexible fence 241 having a thickness of t1 and extending from the groove bottom 233 of the primary groove 23 and two second flexible fences 242 having a thickness of t2 and extending from each of the opposite groove sidewalls 231, 232. Two second flexible fences 242 are offset each other in a circumferential direction in the primary groove 23. The first flexible fence 241 is placed at a position circumferentially between two second flexible fences 242, 242 and circumferentially offset from both of the second flexible fences 242 in the primary groove 23. The thickness t1 of the first flexible fence 241 is thinner than the thickness t2 of the second flexible fence 242, as shown in Fig. 4. The first and the second flexible fences 241, 242 partly overlap in a circumferential direction. The first and the second flexible fences 241, 242 cover at least equal to 70% of the cross sectional area of the primary groove 23, as shown in Fig. 5.

The first flexible fence 241 has an upwardly tapered trapezoid shape. The width wb1 of the first flexible fence 241 at the groove bottom 233 of the primary groove 23 is set at most equal to 45% of the width WB of the groove bottom 233. The first flexible fence 241 radially extends to a level substantially equal to that of the contact face 22. This width wb1 of the first flexible fence 241 at the groove bottom 233 is equal to 4.5mm, which is 38% of the width WB of the groove bottom 233 of the primary groove 23.

A bottom edge 2422 of the second flexible fence 242 extends obliquely upwardly from the groove sidewall 231, 232 so as to form a triangular space thereunder. A top edge 2421 of the second flexible fence 242 extends substantially parallel to the contact face 22 at a level below the contact face 22. The width wb2 of the flexible fence 242 at the bottom edge 2422 (length of the bottom edge 2422 in tire axial direction) is set at most equal to 40% of the width WB of the groove bottom 233. In this second embodiment, this width wb2 of the second flexible fence 242 at the bottom edge 2422 is equal to 3.5mm, which is 30% of the width WB of the groove bottom 233 of the primary groove 23.

The second flexible fence 242 is shaped so as to form an angle A1 between an imaginary line connecting a free or distal ends of the top edge 2421 and the bottom edge 2422 and an imaginary line extending in a tire radial direction. In this second embodiment, this angle A1 is - 10°.

The angle A1 may be between -25° and 25°. If the angle A1 is less than -25° or more than 25°, there is a risk that cracking of the second flexible fence during molding and demolding occurs in particular an area where the bottom edge of the second flexible fence is connected with the groove sidewall even width wb2 of the second flexible fence at the bottom edge is limited to at most equal to 40% of the width WB of the groove bottom of the primary groove. By setting this angle A1 between -25° and 25°, productivity of the tread is maintained. This angle A1 is preferable between -20° and 20°, more preferably between -18° and 18°.

The thickness t1 of the first flexible fence 241 is thinner than the thickness t2 of the second flexible fence 242. It is possible to have easier bending of the first flexible fence 241 even with reduced groove depth, which results further improvement on drainage capability. Both the thickness t1 of the first flexible fence 241 and the thickness t2 of the second flexible fence 242 is preferably less than or equal to 1.5mm, more preferably between 1.0mm and 0.2mm, and a gap between two thicknesses t1 and t2 is preferably less than or equal to 1.0mm, more preferably less than or equal to 0.5mm.

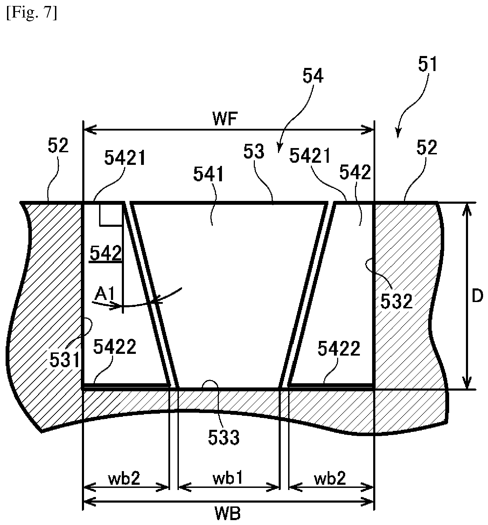

A tread 51 according to a third embodiment of the present invention will be described referring to Figs. 6 and 7. Fig.6 is an enlarged schematic view of a portion according to the third embodiment of the present invention. Fig.7 is a schematic cross sectional view according to the third embodiment of the present invention. The constitution of this third embodiment is similar to that of the first embodiment other than the arrangement shown in Figs. 6 and 7, thus description will be made referring to Figs. 6 and 7.

In the third embodiment, the closing device 54 comprises one first flexible fence 541 having thickness t1 and extending from the groove bottom 533 of the primary groove 53 and two second flexible fences 542 having the thickness t2 and extending from each of the opposite groove sidewalls 531, 532. The thickness t1 of the first flexible fence 541 is thicker than the thickness t2 of the second flexible fence 542, as shown in Fig. 6.

As shown in Figs. 6 and 7, between the free or distal end of the second flexible fence 542 and the side edge of the first flexible fence 541, a radially extending narrow gap is formed. Thus, the first flexible fence 541 and the second flexible fence 542 are shaped so as not to overlap in a circumferential direction. The first and the second flexible fences 541, 542 cover at least equal to 70% of the sectional area of the primary groove 53, as shown in Fig. 7.

The first flexible fence 541 has an upwardly tapered trapezoid shape. The width wb1 of the first flexible fence 541 at the groove bottom 533 of the primary groove 53 is set at most equal to 45% of the width WB of the groove bottom 533. The first flexible fence 541 radially extends to a level substantially equal to the contact face 52. In this third embodiment, this width wb1 of the first flexible fence 541 at the groove bottom 533 is equal to 7.4mm, which is 35% of the width WB of the groove bottom 533 of the primary groove 53.

The bottom edge 5422 of the second flexible fence 542 axially extends in substantially parallel to the groove bottom 533 at a level upwardly spaced from the groove bottom 533 defining an axially extending narrow gap therebetween. The top edge 5421 of the second flexible fence 542 axially extends substantially parallel to the contact face 52 at the level of the contact face 52.

The width wb2 (axial length) of the second flexible fence 542 at the bottom edge 5422 is set at most equal to 40% of the width WB of the groove bottom 533. In this third embodiment, this width wb2 of the second flexible fence 542 at the bottom edge 5422 is equal to 6.3mm, which is 30% of the width WB of the groove bottom 533.

As shown in Figs. 6 and 7, between the free or distal end of the second flexible fence 542 and the side edge of the first flexible fence 541, radially obliquely extending narrow gaps are formed. Thus, the first flexible fence 541 and the second flexible fence 542 are shaped so as not to overlap in a circumferential direction.

The second flexible fence 542 is shaped so as to form an angle A1 between an imaginary line connecting the free ends of the top edge 5421 and the bottom edge 5422 of the second flexible fence 542 and an imaginary line extending from the free end of the top edge 5421 in a tire radial direction. In this third embodiment, this angle A1 is 15°.

The thickness t1 of the first flexible fence 541 is thicker than the thickness t2 of the second flexible fence 542. Therefore, it is possible to have a regular wear of the first flexible fence 541 with tread wear by increased bending rigidity of the first flexible fence 541 relative to the second flexible fence 542.

The invention is not limited to the examples described and represented and various modifications can be made there without leaving its scope as defined in the appended claims.

### [Examples]

In order to confirm the effect of the present invention, one type of pneumatic tire of Example to which the present invention is applied and other type of pneumatic tire of Reference were prepared. An internal construction of these tires other than tread was typical radial tire construction for passenger car tire.

The Example was a pneumatic tire having a tread as described in the above first embodiment. The Reference was a pneumatic tire having a tread same as the Example but provided without closing device in a primary groove. Both tires were mounted onto a rim of 7.5Jx17, and inflated to 220kPa.

### Noise test:

Unused test tires were mounted onto all four wheels of a 1,400cc front-wheel drive vehicle. On a straight pass surface conform to standard ISO 10844: 2011, so-called "coast-by" noise in accordance with standard ISO 13325 at a speed of 80 km/h during coasting with engine cut-off and at neutral gear position was measured. The results are shown in table 1. In this table 1, results are represented by a gap of weighted sound pressure level in decibel (dB(A)) over the Reference (Reference = 0 dB(A)), lower the value indicates better the noise performance.

### Hydroplaning test:

Unused test tires were mounted onto all four wheels of a 1,400cc front-wheel drive vehicle. On a straight pass asphalt surface provided with a pool filled with approximately 8 mm deep water, a speed at which one of two driving wheels reaches 10% slip ratio during passage of the pool was measured. The results are shown in table 1 also. In this table 1, results are represented by an index of 100 for the Reference, higher the number indicates better the hydroplaning performance.

**[Table 1]**

| | Example | Reference |
|---|---|---|
| Noise performance (dB(A)) | -2.1 | 0.0 |
| Hydroplaning performance (index) | 99 | 100 |

As seen from table 1, the Example tire shows important improvement on noise performance while maintaining equivalent hydroplaning performance.

### [Reference Signs List]

- 1, 21, 51: tread
- 2, 22, 52: contact face
- 3, 23, 53: primary groove
- 31, 231, 531: groove sidewall of the primary groove
- 32, 232, 532: groove sidewall of the primary groove
- 33, 233, 533: groove bottom of the primary groove
- 4, 24, 54: closing device
- 41, 241, 541: first flexible fence
- 42, 242, 542: second flexible fence
- 421, 2421, 5421: top edge of the second flexible fence
- 422, 2422, 5422: bottom edge of the second flexible fence
- 5: contact patch

## Claims

1. A tread (1) for a tire having a contact face (2) intended to come into contact with ground during rolling and comprising at least one primary groove (3) having depth D and delimited by two opposite groove sidewalls (31, 32), these groove sidewalls (31, 32) being axially connected by a groove bottom (33), the primary groove (3) being provided with a plurality of closing devices (4) each including at least two flexible fences, at least one first flexible fence (41) having thickness t1 and extending from the groove bottom (33) in a radially outward direction of the tire, and at least one second flexible fence (42) having thickness t2 and extending from one groove sidewall (31, 32) toward the other groove sidewall (32, 31), each of the closing devices (4) covering at least equal to 70% of the sectional area of the primary groove (3) and being disposed such that at least one closing device (4) is always located in the primary groove (3) within a contact patch (5), the second flexible fence (42) having a bottom edge (422) extending along and apart from the groove bottom (33) and a top edge (421) extending substantially parallel to the contact face (2), the second flexible fence (42) being shaped so as to form an angle A1 between an imaginary line connecting a free end of the top edge (421) of the second flexible fence (42) and a free end of the bottom edge (422) of the second flexible fence (42) and an imaginary line extending from the free end of the top edge (421) in a tire radial direction, wherein a width wb2 of the second flexible fence (42) at the bottom edge (422) is at most equal to 40% of the width WB of the groove bottom (33) of the primary groove (3), the tread being **characterized in that** a width wb1 of the first flexible fence (41) at the groove bottom (33) is at most equal to 45% of a width WB of the groove bottom (33) of the primary groove (3).

2. The tread (1) according to claim 1, **wherein** the first flexible fence (41) and the second flexible fence (42) do not overlap in a circumferential direction.

3. The tread (1) according to claim 1 or claim 2, **wherein** the angle A1 is between -25° and 25°.

4. The tread (1) according to any one of the claims 1 to 3, **wherein** the closing device (4) includes one first flexible fence (41) and two second flexible fences (42) and each of the second flexible fences (42) extends from each of opposite groove sidewalls (31, 32).

5. The tread (1) according to any one of the claims 1 to 4, **wherein** the width wb1 of the first flexible fence (41) at the groove bottom (33) of the primary groove (3) is at most equal to 40% of the width WB of the groove bottom (33) of the primary groove (3), and the width wb2 of the second flexible fence (42) at the bottom edge (422) is at most equal to 30% of the width WB of the groove bottom (33) of the primary groove (3).

6. The tread (1) according to any one of the claims 1 to 5, **wherein** the thickness t1 of the first flexible fence (41) is different from the thickness t2 of the second flexible fence (42).

7. A tire having a tread according to any one of the claims 1 to 6.

## Patentansprüche

1. Reifenprofil (1) für einen Reifen mit einer Kontaktfläche (2), die dazu bestimmt ist, während des Rollens mit dem Boden in Kontakt zu kommen, und mindestens eine primäre Rille (3) umfasst, die eine Tiefe D aufweist und durch zwei gegenüberliegende Rillenseitenwände (31, 32) begrenzt ist, wobei diese Rillenseitenwände (31, 32) durch einen Rillenboden (33) axial verbunden sind, die primäre Rille (3) mit einer Mehrzahl von Schließvorrichtungen (4) versehen ist, die jeweils mindestens zwei flexible Führungen umfassen, mindestens eine erste flexible Führung (41) eine Dicke t1 aufweist und sich vom Rillenboden (33) in einer radial nach außen verlaufenden Richtung des Reifens erstreckt, und mindestens eine zweite flexible Führung (42) eine Dicke t2 aufweist und sich von einer Rillenseitenwand (31, 32) zur anderen Rillenseitenwand (32, 31) erstreckt, jede der Schließvorrichtungen (4) mindestens gleich 70 % der Querschnittsfläche der primären Rille (3) abdeckt und derart angeordnet ist, dass mindestens eine Schließvorrichtung (4) sich immer in der primären Rille (3) innerhalb einer Aufstandsfläche (5) befindet ist, die zweite flexible Führung (42) eine untere Kante (422), die sich entlang des Rillenbodens (33) und davon weg erstreckt, und eine obere Kante (421) aufweist, die sich im Wesentlichen parallel zur Kontaktfläche (2) erstreckt, die zweite flexible Führung (42) so geformt ist, dass sie einen Winkel A1 zwischen einer imaginären Linie, die ein freies Ende der oberen Kante (421) der zweiten flexiblen Führung (42) und ein freies Ende der unteren Kante (422) der zweiten flexiblen Führung (42) verbindet, und einer imaginäre Linien bildet, die sich vom freien Ende der oberen Kante (421) in einer radialen Reifenrichtung erstreckt, wobei eine Breite wb2 der zweiten flexiblen Führung (42) an der unteren Kante (422) höchstens gleich 40 % der Breite WB des Rillenbodens (33) der primären Rille (3) ist, wobei das Reifenprofil **dadurch gekennzeichnet ist, dass** eine Breite wb1 der ersten flexiblen Führung (41) am Rillenboden (33) höchstens gleich 45 % einer Breite WB des Rillenbodens (33) der primären Rille (3) ist.

2. Reifenprofil (1) nach Anspruch 1, wobei die erste flexible Führung (41) und die zweite flexible Führung (42) einander in einer Umfangsrichtung nicht überlappen.

3. Reifenprofil (1) nach Anspruch 1 oder 2, wobei der Winkel A1 zwischen -25° und 25° beträgt.

4. Reifenprofil (1) nach einem der Ansprüche 1 bis 3, wobei die Schließvorrichtung (4) eine erste flexiblen Führung (41) und zwei zweite flexible Führungen (42) umfasst, und jede der zweiten flexiblen Führungen (42) sich von jeder von gegenüberliegenden Rillenseitenwänden (31, 32) erstreckt.

5. Reifenprofil (1) nach einem der Ansprüche 1 bis 4, wobei die Breite wb1 der ersten flexiblen Führung (41) am Rillenboden (33) der primären Rille (3) höchstens gleich 40 % der Breite WB des Rillenbodens (33) der primären Rille (3) ist, und die Breite wb2 der zweiten flexiblen Führung (42) an der unteren Kante (422) höchstens gleich 30 % der Breite WB des Rillenbodens (33) der primären Rille (3) ist.

6. Reifenprofil (1) nach einem der Ansprüche 1 bis 5, wobei die Dicke t1 der ersten flexiblen Führung (41) verschieden von der Dicke t2 der zweiten flexiblen Führung (42) ist.

7. Reifen mit einem Reifenprofil nach einem der Ansprüche 1 bis 6.

## Revendications

1. Bande de roulement (1) pour un pneu ayant une face de contact (2) prévue pour venir en contact avec le sol pendant le roulage et comprenant au moins une rainure principale (3) ayant une profondeur D et délimitée par deux parois latérales de rainure (31, 32) opposées, ces parois latérales de rainure (31, 32) étant axialement raccordées par un fond de rainure (33), la rainure principale (3) étant prévue avec une pluralité de dispositifs de fermeture (4) comprenant chacun au moins deux barrières souples, au moins une première barrière souple (41) ayant une épaisseur t1 et s'étendant à partir du fond de rainure (33) dans une direction radialement vers l'extérieur du pneu, et au moins une seconde barrière souple (42) ayant une épaisseur t2 et s'étendant à partir d'une paroi latérale de rainure (31, 32) vers l'autre paroi latérale de rainure (32, 31), chacun des dispositifs de fermeture (4) recouvrant au moins une valeur égale à 70% de la surface transversale de la rainure principale (3) et étant disposé de sorte qu'au moins un dispositif de fermeture (4) est toujours positionné dans la rainure principale (3) à l'intérieur d'une pièce de contact (5), la seconde barrière souple (42) ayant un bord inférieur (422) s'étendant le long et à distance du fond de rainure (33) et un bord supérieur (421) s'étendant sensiblement parallèlement à la face de contact (2), la seconde barrière souple (42) étant formée afin de former un angle A1 entre une ligne imaginaire raccordant une extrémité libre du bord supérieur (421) de la seconde barrière souple (42) et une extrémité libre du bord inférieur (422) de la seconde barrière souple (42) et une ligne imaginaire s'étendant à partir de l'extrémité libre du bord supérieur (421) dans une direction radiale de pneu, dans laquelle une largeur wb2 de la seconde barrière souple (42) au niveau du bord inférieur (422) est égale au maximum à 40% de la largeur WB du fond de rainure (33) de la rainure principale (3), la bande de roulement étant **caractérisée en ce qu'**une largeur wb1 de la première barrière souple (41) au niveau du fond de rainure (33) est égale au maximum à 45% d'une largeur WB du fond de rainure (33) de la rainure principale (3).

2. Bande de roulement (1) selon la revendication 1, dans laquelle la première barrière souple (41) et la seconde barrière souple (42) ne se chevauchent pas dans une direction circonférentielle.

3. Bande de roulement (1) selon la revendication 1 ou la revendication 2, dans laquelle l'angle A1 est compris entre -25° et 25°.

4. Bande de roulement (1) selon l'une quelconque des revendications 1 à 3, dans laquelle le dispositif de fermeture (4) comprend une première barrière souple (41) et deux secondes barrières souples (42), et chacune des secondes barrières souples (42) s'étend à partir de chacune des parois latérales de rainures (31, 32) opposées.

5. Bande de roulement (1) selon l'une quelconque des revendications 1 à 4, dans laquelle la largeur wb1 de la première barrière souple (41) au niveau du fond de rainure (33) de la rainure principale (3) est égale au maximum à 40% de la largeur Wb du fond de rainure (33) de la rainure principale (3), et la largeur wb2 de la seconde barrière souple (42) au niveau du bord inférieur (422) est égale au maximum à 30% de la largeur WB du fond de rainure (33) de la rainure principale (3).

6. Bande de roulement (1) selon l'une quelconque des revendications 1 à 5, dans laquelle l'épaisseur t1 de la première barrière souple (41) est différente de l'épaisseur (t2) de la seconde barrière souple (42).

7. Pneu ayant une bande de roulement selon l'une quelconque des revendications 1 à 6.
